# EUROPEAN PATENT APPLICATION

(11) **EP 4 054 283 A1**
(43) Date of publication of application: **07.09.2022**
(21) Application number: 20882292.4
(22) Date of filing: 16.09.2020
(51) Int. Cl.: H04W 76/28

(54) **DISCONTINUOUS RECEPTION CONFIGURATION METHOD, CONFIGURATION APPARATUS, BASE STATION, TERMINAL, AND STORAGE MEDIUM**

(30) Priority: 31.10.2019 CN 201911055553
(71) Applicant: ZTE Corporation, Shenzhen, Guangdong 518057 (CN)
(72) Inventor: HUANG, Jianlin, Shenzhen, Guangdong 518057 (CN)
(74) Representative: Deambrogi, Edgardo
(86) International application number: PCT/CN2020/115638
(87) International publication number: WO 2021/082783

(57) **Abstract**

Provided are a discontinuous reception configuration method and configuration device, a base station, a terminal and a storage medium. The method comprises: identifying a current communication scene of a terminal; issuing, according to a preset relationship between a communication scene and a DRX cycle use strategy, a DRX cycle use strategy corresponding to the current communication scene. So that the base station can send a corresponding DRX cycle use strategy according to a current communication scene of the terminal.

## Description

### Technical Field

The present disclosure relates to, but are not limited to, the field of communications technologies, and in particular, to, but are not limited to, a discontinuous reception configuration method, a configuration device, a base station, a terminal, and a storage medium.

### Background

DRX (Discontinuous Reception) refers to a technology that a terminal monitors and receives a PDCCH (Physical Downlink Control Channel) in an activation period, and does not monitor and receive the PDCCH in a non-activation period, thereby the power saving of the terminal is achieced. In the related art, a DRX Command MAC CE/Long DRX Command MAC CE (Media Access Control; Control Element) is delivered by a base station, and is used for forcibly aligning the DRX states of the base station and a terminal. In a wireless mobile communication protocol, a next symbol after a base station side and a terminal side receive a DRX Command MAC CE is defined, and a DRX state is converted into a shortCycle; after receiving the next symbol from the Long DRX Command MAC CE, the DRX state is switched to the longCycle.

In some scenes, because the long/short cycle of the terminal is not suitable for the current communication scene, the terminal has an unnecessary activation time.

### Summary

The embodiments of the present disclosure provide a discontinuous reception configuration method, a configuration device, a base station, a terminal, and a storage medium. The technical problem to be solved is that the long/short cycle of the terminal is not suitable for the current communication scene, which causes the terminal to have an unnecessary activation time.

In order to solve the described technical problem, the embodiments of the present disclosure provide a discontinuous reception configuration method, comprising: identifying a current communication scene of a terminal; issuing, according to a preset relationship between a communication scene and a discontinuous reception DRX cycle use strategy, corresponding to the current communication scene.

Embodiments of the present disclosure further provide a discontinuous reception configuration method. The method comprises: receiving a DRX cycle use strategy which is sent by a base station and issued according to a preset relationship between a communication scene and a DRX cycle use strategy, corresponding to a current communication scene; setting a corresponding DRX cycle according to the received DRX cycle use strategy.

An embodiment of the present disclosure further provides a configuration device, comprising: an identifying module configured to identify a current communication scene of a terminal; a strategy issuing module, configured to issue a DRX cycle use strategy corresponding to the current communication scene according to a preset relationship between a communication scene and a DRX cycle use strategy.

The embodiments of the present disclosure further provide a receiving device, comprising: a receiving module, configured to receive a DRX cycle use strategy which is sent by a base station and issued according to a preset relationship between a communication scene and a DRX cycle use strategy, corresponding to a current communication scene;
and an execution component, configured to set a corresponding DRX cycle according to the received DRX cycle use strategy.

An embodiment of the present disclosure further provides a base station, wherein the base station comprises:
A first processor, a first memory, and a first communication bus; the first communication bus is configured to implement connection and communication between the first processor and the first memory; the first processor is configured to execute one or more computer programs stored in the first memory, so as to implement the operations of the discontinuous reception configuration method implemented by the base station as described above.

An embodiment of the present disclosure further provides a terminal. The terminal comprises: a second processor, a second memory, and a second communication bus; the second communication bus is configured to implement connection and communication between the second processor and the second memory; the second processor is configured to execute one or more computer programs stored in the second memory to implement the operations of the discontinuous reception configuration method implemented by the terminal as described above.

Embodiments of the present disclosure further provide a storage medium. The storage medium stores one or more programs. The one or more programs is executed by one or more processors, so as to implement the operations of the discontinuous reception configuration method implemented by the configuration device or the discontinuous reception method implemented by the receiving device.

Provided are a discontinuous reception configuration method and configuration device, a base station, a terminal and a storage medium. The method comprises: identifying a current communication scene of a terminal; issuing, according to a preset relationship between a communication scene and a DRX cycle use strategy, a DRX cycle use strategy corresponding to the current communication scene. So that the base station can send a corresponding DRX cycle use strategy according to a current communication scene of the terminal; the terminal can change a DRX cycle state thereof according to a DRX cycle use strategy issued by the base station, so that a current DRX cycle state of the terminal conforms to a current communication scene, thereby better playing the role of a DRX cycle function, and improving the user experience.

Additional features and corresponding advantages of the disclosure will be set forth in the description which follows, and in part will be readily apparent from the description of the disclosure.

### Brief Description of the Drawings

Fig. 1 is a basic flowchart of a discontinuous reception configuration method according to a first embodiment of the present disclosure;
Fig. 2 is a basic schematic flowchart of another discontinuous reception configuration method according to Embodiment 1 of the present disclosure;
Fig. 3 is a schematic diagram of a basic structure of a configuration device according to a third embodiment of the present disclosure;
Fig. 4 is a schematic diagram of a basic structure of a receiving device according to a third embodiment of the present disclosure;
Fig. 5 is a schematic diagram of a structure of a base station according to a fourth embodiment of the present disclosure;
Fig. 6 is a schematic diagram of a terminal according to a fourth embodiment of the present disclosure.

### Detailed Description of the Embodiments

In order to make the objectives, technical solutions and advantages of the present disclosure clearer and more comprehensible, the embodiments of the present disclosure will be further described below in detail with reference to the drawings and specific embodiments. It should be understood that the specific embodiments described herein are only used to explain the present disclosure and are not intended to limit the present disclosure.

### Embodiment 1:

In order to solve the problem that a long/short cycle of a terminal is not suitable for a current communication scene, so that the terminal has an unnecessary activation time, system power consumption is improved, or a response time of the terminal is too long, and a delay is too high, and meanwhile, the problem that a long/short cycle of a DRX on a base station side and a terminal side is not aligned, and a high error packet and DCI are lost is caused.

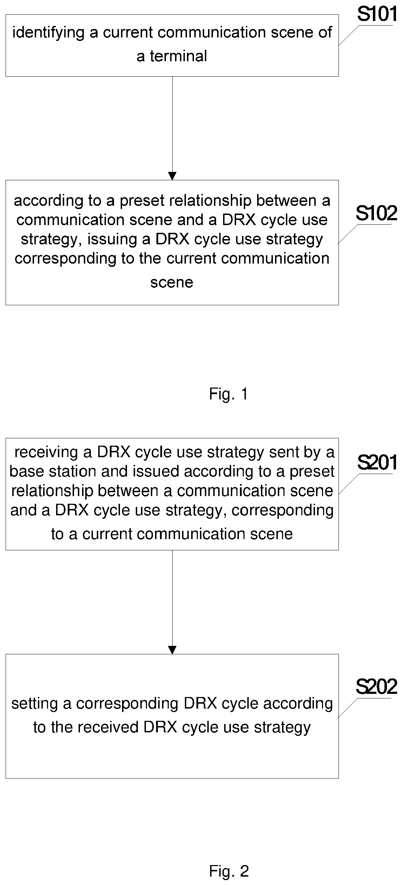

Embodiments of the present disclosure provide a discontinuous reception configuration method. Referring to Fig. 1, Fig. 1 is a basic schematic flowchart of a discontinuous reception configuration method according to an embodiment of the present disclosure. The discontinuous reception configuration method includes:
S101, identifying a current communication scene of a terminal;

In this embodiment, a base station identifies a current communication scene of a terminal; it should be understood that the base station identifies a current communication scene of the terminal based on data interaction with the terminal; in this embodiment, a method for identifying a current communication scene of a terminal or a specific parameter for identifying the current communication scene of the terminal is not limited. As long as the current communication scene of the terminal can be identified, for example, when data interaction can be performed currently between the terminal and the base station, when a terminal sends data to a base station, identifying a current communication scene of the terminal by monitoring an arrival frequency or a time interval of the data, etc.; it should be noted that the above method is only used as an example for description, and is not intended to limit the method for identifying the current communication scene of the terminal.

S102, according to a preset relationship between a communication scene and a DRX cycle use strategy, issuing a DRX cycle use strategy corresponding to the current communication scene.

In this embodiment, the preset relationship between a communication scene and a DRX cycle use strategy comprises: when the terminal is in a communication scene where a signal-to-noise ratio is less than a first preset signal-to-noise ratio threshold value and a packet error rate is higher than a first preset packet error rate threshold value, the current communication scene corresponds to a long DRX cycle use strategy; for example, when the terminal is far away from the base station, because the terminal is far away from the base station, there may be a case where the signal-to-noise ratio of the terminal at this moment is less than the first preset signal-to-noise ratio threshold value, and meanwhile, there is a case where the packet error rate of the received data packet is higher than the first preset packet error rate threshold value, and at this moment, the current communication scene corresponds to a long DRX cycle use strategy, and the current communication scene corresponds to a long DRX cycle use strategy is sent by the base station to the terminal at this moment; it should be understood that, when the distance between the terminal and the base station is short, there may also be a case that the signal-to-noise ratio of the terminal is low and the packet error rate is high; it should be understood that, the first preset signal-to-noise ratio threshold in which the signal-to-noise ratio is less than the first preset signal-to-noise ratio threshold may be flexibly set by a related design person, and in this embodiment, a specific value of the first preset signal-to-noise ratio threshold in the signal-to-noise ratio is not limited; meanwhile, the packet error rate is higher than the first preset packet error rate threshold in the first preset packet error rate threshold, and may also be flexibly set by a related design person. In this embodiment, a specific value of the first preset packet error rate threshold in the packet error rate is not limited.

In this embodiment, in some scenes, only when a signal-to-noise ratio of a terminal at this time is less than a first preset signal-to-noise ratio threshold, a packet error rate of a received data packet is higher than the first preset packet error rate threshold, and the terminal is in a short DRX cycle state, a base station correspondingly issues a long DRX cycle use strategy to the corresponding terminal at this time; that is, when a terminal is in a long DRX cycle state, a long DRX cycle use strategy or a short DRX cycle use strategy will not be delivered to the corresponding terminal, thereby saving system resources.

In this embodiment, the preset relationship between the communication scene and the DRX cycle use strategy includes: when the terminal is in a communication scene environment of a Measurement Gap, the preset relationship corresponds to a long DRX cycle use strategy. A measurement interval refers to reserving a part of time for measurement, and during this period of time, a terminal does not send and receive any data, but turns a receiver to a frequency point of a target cell to perform inter-frequency measurement, and then turns to a current cell when the measurement interval time ends. Generally, when a measurement interval is initiated, the terminal is located at the boundary of the coverage range of the base station, and in this case, there is no condition for performing a heavy traffic service. The inter-frequency measurement depends on the implementation of the terminal. If the bandwidth of the terminal receiver can cover the frequency points of the serving primary serving cell and the cell to be measured at the same time, it is unnecessary to support the measurement interval GAP to implement inter-frequency measurement. However, since the protocol consideration is to reduce the processing requirements of the terminal as far as possible so as to be simplified, the bandwidth of the receiver of the terminal is limited at present, which is not sufficient to cover the frequency point of the serving cell and the frequency point of the cell to be measured at the same time, and therefore the terminal needs to be assisted by a measurement interval GAP (gap-assisted type measurement) to perform inter-frequency measurement. In a GAP measurement period, measurement of all services and serving cells needs to be stopped, and the measurement is specially used for measurement of inter-frequency neighbour cells, thereby having a certain impact on cell throughput. It should be understood that, the scene recognition of the terminal GAP measurement period is triggered by an existing dedicated algorithm or method, and the scene recognition of the terminal GAP measurement period is not a focus of the present disclosure, which is not described herein again.

In this embodiment, in some scenes, when a terminal is in a communication scene environment of a Measurement Gap and the terminal is in a short DRX cycle state, a base station correspondingly delivers a long DRX cycle use strategy to the corresponding terminal at this time; that is, when a terminal is in a long DRX cycle state, a long DRX cycle use strategy or a short DRX cycle use strategy will not be delivered to the corresponding terminal, thereby saving system resources.

In this embodiment, the preset relationship between a communication scene and a DRX cycle use strategy comprises: when the terminal is in a communication scene where a ping packet delay is higher than a preset ping packet delay threshold value, a short DRX cycle use strategy corresponding to the terminal; a communication scene in which a terminal is located when a ping packet delay is higher than a preset ping packet delay threshold value comprises: a ping packet delay sent by a terminal and received by a base station being higher than a preset ping packet delay threshold value and/or a ping packet delay sent by a base station and received by the terminal being higher than a preset ping packet delay threshold value; in this case, it corresponds to a short DRX cycle use strategy, and the base station issues the short DRX cycle use strategy corresponding to the current communication scene of the terminal to the terminal. It should be understood that, the preset ping packet delay threshold value that is sent by the terminal and received by the base station and whose packet delay is higher than the preset ping packet delay threshold value may be flexibly set by a relevant designer, and in this embodiment, a specific value of the preset ping packet delay threshold value in the signal-to-noise ratio is not limited; meanwhile, the time delay of the ping packet sent by the base station and received by the terminal is higher than the preset time delay threshold of the ping packet in the preset time delay threshold of the ping packet, which may also be flexibly set by relevant designers, and in this embodiment, the specific numerical value of the preset time delay threshold of the ping packet in the packet error rate is not limited.

In this embodiment, in some scenes, only when a terminal is in a communication scene in which a delay of a ping packet is higher than a preset threshold of the delay of the ping packet and the terminal is in a long DRX cycle state, a base station correspondingly issues a short DRX cycle use strategy to the corresponding terminal at this time; that is, when the terminal is in the short DRX cycle state, the terminal does not deliver the long DRX cycle use strategy or the short DRX cycle use strategy to the corresponding terminal, thereby saving system resources.

In this embodiment, the preset relationship between the communication scene and the use strategy of the DRX cycle comprises: when the terminal is in a communication scene where a RTT (Round-Trip Time) of a downlink small traffic FTP (File Transfer Protocol) service is higher than a preset round trip time threshold, corresponds to the use strategy of the short DRX cycle. It should be understood that, a specific method for detecting a RTT (Round-Trip Time) of a small-traffic FTP (File Transfer Protocol) service in a terminal is not a key point of the present disclosure, and it is only required to detect a RTT (Round-Trip Time) of a small-traffic FTP (File Transfer Protocol) service in a terminal, which is not described herein again. It should be understood that, the preset round trip delay threshold may be flexibly set by a related person in a communication scene in which the round trip delay RTT (Round-Trip Time) of the terminal in the downlink small flow FTP (File Transfer Protocol) service is higher than the preset round trip delay threshold. In this embodiment, a specific value of the preset round-trip delay threshold is not limited in a communication scene where the end is located at a lower traffic flow FTP (File Transfer Protocol) service and a round-trip delay RTT (Round-Trip Time) is higher than the preset round-trip delay threshold.

It should be understood that, in some scenes, only when a communication scene in which a round trip delay of a downlink small traffic service is higher than a preset round trip delay threshold exists and a terminal is in a long DRX cycle state, a base station correspondingly issues a short DRX cycle use strategy to the corresponding terminal at this time; that is, when the terminal is in the short DRX cycle state, the base station does not deliver the long DRX cycle use strategy or the short DRX cycle use strategy to the corresponding terminal, thereby saving system resources.

In this embodiment, the preset relationship between a communication scene and a DRX cycle use strategy comprises: when the terminal is in a communication scene where a signal-to-noise ratio is higher than a second preset signal-to-noise ratio threshold value and a packet error rate is higher than a second preset packet error rate threshold value, then the current communication scene correspond to a current DRX cycle use strategy of a base station. For example, a base station and a terminal are in a short DRX cycle state at this moment, and the base station identifies a long DRX cycle use strategy corresponding to a current communication scene of the terminal. In this case, the base station issues a scheme for using a long DRX cycle, and changes a state of a DRX cycle of the base station to a use state of the long DRX cycle. In this case, the terminal may not detect the long DRX cycle use state delivered by the base station, so that the base station has been changed into the long DRX cycle use state. However, the terminal is still in a short DRX cycle use state, and at this time, because the DRX state of the terminal is inconsistent with that of the base station. As a result, the terminal and the base station parse out the data packets as wrong packets, and at this time, the calculated packet error rate is higher than a second preset threshold value of packet error rate, and when identifying that the current signal-to-noise ratio of the terminal is higher than the second preset signal-to-noise ratio threshold value, the base station sends the current DRX period use strategy of the base station at this time. In other words, the base station issues the strategy of using the long DRX cycle to the terminal, and it should be understood that. The base station is in a short DRX cycle state at this time, and a short DRX cycle strategy is issued at this time, so that the DRX cycle states of the base station side and the terminal side are aligned, repairing the phenomena such as high packet error rate and DCI (Downlink Control Information) loss caused by the terminal and the base station being not in alignment with the DRX state.

It should be understood that, this embodiment does not limit that, when the terminal is in a communication environment in which a signal-to-noise ratio is higher than a second preset signal-to-noise ratio threshold and a packet error rate is higher than the second preset packet error rate threshold, a specific value of the signal-to-noise ratio being higher than the second preset signal-to-noise ratio threshold in a current DRX cycle use strategy of the corresponding base station may be flexibly set by a related design person; in this embodiment, a specific value of the false positive rate that is greater than the preset threshold in the second preset false positive rate threshold is also not limited, and may also be flexibly set by a related designers.

An embodiment of the present disclosure further provides a discontinuous reception method. Referring to Fig. 2, Fig. 2 is a basic schematic flowchart of a discontinuous reception configuration method provided by the embodiment. The discontinuous reception configuration method includes:
S201, receiving a DRX cycle use strategy sent by a base station and issued according to a preset relationship between a communication scene and a DRX cycle use strategy, corresponding to a current communication scene;

It should be understood that, the DRX cycle use strategy received by the terminal may be a long DRX cycle use strategy, and may also be a short DRX cycle use strategy.

In the present embodiment, the preset relationship between a communication scene and a DRX cycle use strategy comprises: when a terminal is in a communication scene where a signal-to-noise ratio is less than a first preset signal-to-noise ratio threshold value and a packet error rate is higher than a first preset packet error rate threshold value, the current communication scene corresponds to a long DRX cycle use strategy.

In this embodiment, the preset relationship between the communication scene and the DRX cycle use strategy comprises: when a terminal is in a communication scene of a measurement interval, the current communication scene corresponds to a long DRX cycle use strategy.

In this embodiment, the preset relationship of the communication scene-DRX cycle use strategy includes: when the terminal is in a communication scene where the delay of a ping packet is higher than a preset threshold value of the delay of the ping packet, the current communication scene corresponds to a short DRX cycle use strategy.

In this embodiment, the preset relationship of the communication scene-DRX cycle use strategy includes: when the terminal is in a communication scene in which the round-trip delay of a downlink small traffic service is greater than a preset round-trip delay threshold value, the current communication scene corresponds to a short DRX cycle use strategy.

In this embodiment, the preset relationship of the communication scene-DRX cycle use strategy includes: when the terminal is in a communication environment where a signal-to-noise ratio is higher than a second preset signal-to-noise ratio threshold value and a packet error rate is higher than the second preset packet error rate threshold value, the current communication scene corresponds to a current DRX cycle use strategy of a base station.

S202, setting a corresponding DRX cycle according to the received DRX cycle use strategy.

In the present embodiment, setting a corresponding DRX cycle according to a received DRX cycle use strategy comprises: when a received DRX cycle use strategy is a short DRX cycle use strategy, converting a current DRX cycle state into a short DRX cycle; when the received DRX cycle use strategy is a long DRX cycle use strategy, converting a current DRX cycle state into a long DRX cycle;

The discontinuous reception configuration method provided in the embodiments of the present disclosure identifies a current communication scene of a terminal; issuing, according to a preset relationship between a communication scene and a DRX cycle use strategy, a DRX cycle use strategy corresponding to the current communication scene; a terminal can change a DRX cycle state according to a current communication scene, and when a delivered DRX cycle use strategy is a long DRX cycle strategy, the terminal can change to the long DRX cycle according to the long DRX cycle use strategy, thereby reducing the activation time of the terminal, and achieving the purpose of saving power for the terminal; when the delivered DRX cycle use strategy is a short DRX cycle strategy, when the terminal can change to the short DRX cycle according to the short DRX cycle use strategy, the sleep time of the base station and the terminal is shorter, and the base station and the terminal can respond and deliver scheduling in a shorter time, thereby reducing the time delay; when a terminal is inconsistent with a base station state, the base station issues a DRX cycle use strategy used by the current base station, and the terminal can change the current DRX cycle use state according to the issued DRX cycle use strategy, thereby repairing the phenomena such as a high packet error rate and DCI (Downlink Control Information) loss caused by misalignment between the terminal and the base station DRX state.

The discontinuous reception configuration method provided in the embodiments of the present disclosure identifies a current communication scene of a terminal; issuing, according to a preset relationship between a communication scene and a DRX cycle use strategy, a DRX cycle use strategy corresponding to the current communication scene; the terminal changes the state of the DRX cycle according to the delivered DRX cycle use strategy, and when the terminal changes to the long DRX cycle according to the long DRX cycle use strategy, the activation time of the terminal is reduced, thereby achieving the purpose of saving power for the terminal; when the terminal changes to the short DRX cycle according to the short DRX cycle use strategy, the sleep time of the base station and the terminal is shorter, and the terminal can respond and issue a scheduling in a shorter time, thereby reducing the time delay; when the state of the terminal is inconsistent with the state of the base station, the current use state of the DRX cycle is changed according to a delivered DRX cycle use strategy, thereby repairing the phenomena such as a high packet error rate and DCI (Downlink Control Information) loss caused by the fact that the DRX state of the terminal is not aligned with that of the base station.

### Embodiment 2:

For ease of understanding, in the embodiments of the present disclosure, a discontinuous reception configuration method is illustrated by taking a more specific example. The discontinuous reception configuration method includes:
S301, receiving data uploaded by a terminal to a base station, and identifying a current communication scene of the terminal according to the received data;

In this embodiment, a base station identifies a current communication scene of a terminal; it should be understood that the base station identifies a current communication scene of the terminal based on data interaction with the terminal; in this embodiment, a method for identifying a current communication scene of a terminal or a specific parameter for identifying the current communication scene of the terminal is not limited. As long as the current communication scene of the terminal can be identified, for example, when data interaction can be performed currently between the terminal and the base station, when a terminal sends data to a base station, identifying a current communication scene of the terminal by monitoring an arrival frequency or a time interval of the data, etc.; it should be noted that the above method is only used as an example for description, and is not intended to limit the method for identifying the current communication scene of the terminal.

S302, when a terminal is in a communication scene where a signal-to-noise ratio is less than a preset threshold value and a packet error rate is higher than the preset threshold value, issuing a long DRX cycle use strategy;

In this embodiment, the preset relationship between a communication scene and a DRX cycle use strategy comprises: when the terminal is in a communication scene where a signal-to-noise ratio is less than a preset threshold value and a packet error rate is higher than the preset threshold value, the current communication scene corresponds to a long DRX cycle use strategy; for example, when the terminal is far away from the base station, because the terminal is far away, there may be a case where the signal-to-noise ratio of the terminal at this moment is less than a preset threshold, and meanwhile, there is a case where the packet error ratio of a received data packet is higher than the preset threshold, then a corresponding long DRX cycle use strategy is obtained at this moment, and the base station delivers, to the terminal, the long DRX cycle use strategy corresponding to the current communication scene of the terminal at this moment; it should be understood that, when the distance between the terminal and the base station is short, there may also be a case that the signal-to-noise ratio of the terminal is low and the packet error rate is high; it should be understood that, the preset threshold in which the signal-to-noise ratio is less than the preset threshold may be flexibly set by a relevant designer, and in this embodiment, a specific value of the preset threshold in the signal-to-noise ratio is not limited; meanwhile, the packet error rate may be higher than a preset threshold in the preset threshold or may be flexibly set by a related designers, and in this embodiment, a specific value of the preset threshold in the packet error rate is not limited.

In this embodiment, in some scenes, only when a signal-to-noise ratio of a terminal at this time is less than a preset threshold, a packet error ratio of a received data packet is higher than the preset threshold, and the terminal is in a short DRX cycle state, a base station correspondingly issues a long DRX cycle use strategy to the corresponding terminal at this time; that is, when a terminal is in a long DRX cycle state, a long DRX cycle use strategy or a short DRX cycle use strategy will not be delivered to the corresponding terminal, thereby saving system resources.

S303, the terminal sets a DRX cycle use state according to the received long DRX cycle use strategy.

In the present embodiment, setting a corresponding DRX cycle according to a received DRX cycle use strategy comprises: when a received DRX cycle use strategy is a short DRX cycle use strategy, converting a current DRX cycle state into a short DRX cycle; when the received DRX cycle use strategy is a long DRX cycle use strategy, converting a current DRX cycle state into a long DRX cycle;

### Embodiment 3:

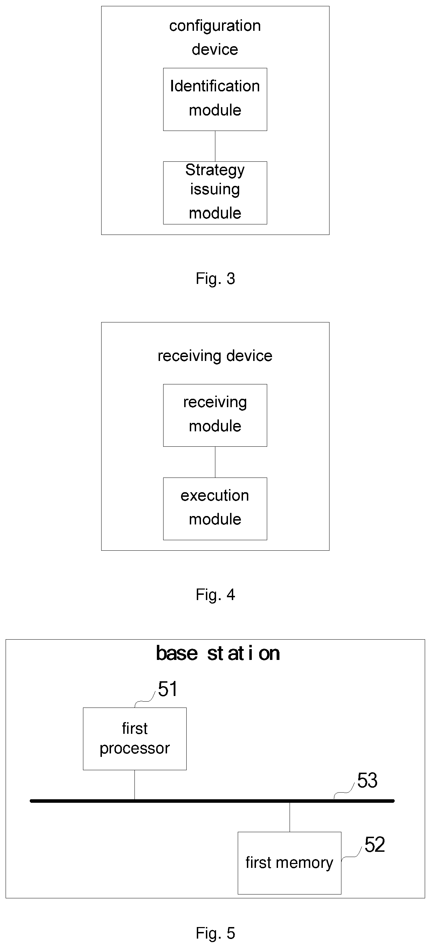

The present embodiment provides a configuration device. As shown in Fig. 3, the device comprises: an identification module and a strategy issuing module;
an identification module configured to identify a current communication scene of a terminal;
a strategy issuing module, configured to issue a DRX cycle use strategy corresponding to the current communication scene according to a preset relationship between a communication scene and a DRX cycle use strategy.

A strategy issuing module is configured to correspondingly issue a long DRX cycle use strategy when a terminal is in a communication scene where a signal-to-noise ratio is less than a first preset signal-to-noise ratio threshold value and a packet error rate is higher than a first preset packet error rate threshold value;

A strategy issuing module is configured to correspondingly issue a long DRX cycle use strategy when a terminal is in a communication scene of a measurement interval;

A strategy issuing module is configured to correspondingly issue a short DRX cycle use strategy when a terminal is in a communication scene where a ping packet delay exceeds a preset ping packet delay threshold value;

A strategy issuing module is configured to correspondingly issue a short DRX cycle use strategy when a terminal is in a communication scene in which a round trip delay of a downlink small traffic service is greater than a preset round trip delay threshold value;

And the strategy issuing module is configured to, when the terminal is in a communication environment where a signal-to-noise ratio is higher than a second preset signal-to-noise ratio threshold value and a packet error rate is higher than a second preset packet error rate threshold value, use a strategy corresponding to a current DRX period of the base station.

The present embodiment provides a receiving device. As shown in Fig. 4, the receiving device comprises: a receiving module and an execution module;
a receiving module, configured to receive a DRX cycle use strategy which is sent by a base station and issued according to a preset relationship between a communication scene and a DRX cycle use strategy, corresponding to a current communication scene;
an execution component, configured to set a corresponding DRX cycle according to the received DRX cycle use strategy.

The execution module is configured to, when a terminal is in a communication scene where a signal-to-noise ratio is less than a first preset signal-to-noise ratio threshold value and a packet error rate is higher than a first preset packet error rate threshold value and a base station correspondingly issues a long DRX cycle use strategy, use the long DRX cycle use strategy;

An execution module is configured to use a long DRX cycle use strategy when a base station correspondingly issues the long DRX cycle use strategy when a terminal is in a communication scene of a measurement interval;

The execution module is configured to use a short DRX cycle use strategy when a base station correspondingly issues a short DRX cycle use strategy when a terminal is in a communication scene where a ping packet delay exceeds a preset ping packet delay threshold value.

The execution module is configured to use a short DRX cycle use strategy when a base station correspondingly issues a short DRX cycle use strategy when a terminal is in a communication scene in which a round trip delay of a downlink small traffic service is greater than a preset round trip delay threshold value.

The execution module is configured to, when the terminal is in a communication environment where a signal-to-noise ratio is higher than a second preset signal-to-noise ratio threshold value and a packet error rate is higher than the second preset packet error rate threshold value, and when the base station correspondingly issues a current DRX cycle use strategy of the base station, use the current DRX cycle use strategy of the base station.

### Embodiment 4:

The present embodiment provides a base station. As shown in Fig. 5, the base station comprises: a first processor 51, a first memory 52 and a first communication bus 53;

The first communication bus 53 is configured to implement connection and communication between the first processor 51 and the first memory 52;

The first processor 51 is configured to execute one or more computer programs stored in the first memory 52, so as to implement the operations of the discontinuous reception configuration method implemented by the base station in each embodiment.

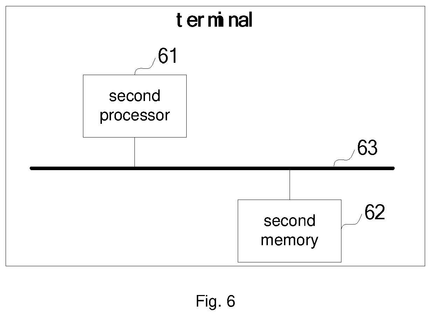

The present embodiment provides a terminal. As shown in Fig. 6, the terminal comprises: a second processor 61, a second memory 62 and a second communication bus 63;

The second communication bus 63 is configured to implement connection and communication between the second processor 61 and the second memory 62;

The second processor 61 is configured to execute one or more computer programs stored in the second memory 62, so as to implement the operations of the discontinuous reception configuration method implemented by the terminal according to the embodiments.

This embodiment also provides a storage medium that includes volatile or non-volatile, removable or non-removable media implemented in any method or technology for storage of information (such as instructions, data structures, computer program modules, or other data). The storage medium includes, but is not limited to, a RAM (Random Access Memory), a ROM (Read-Only Memory), EEPROM (Electrically Erasable Programmable read only memory), flash memory or other memory technology, CD-ROM (Compact Disc Read-Only Memory), optical disc read-only memory, digital versatile discs (DVDs) or other optical disc storage, magnetic cassettes, magnetic tape, magnetic disk storage or other magnetic storage devices, or any other medium which can be used to store the desired information and which can be accessed by a computer.

The storage medium in this embodiment may be configured to store one or more computer programs. The one or more computer programs stored in the storage medium may be executed by a processor, so as to implement at least one step of the discontinuous reception configuration method implemented by the configuration device in each of the foregoing embodiments or the discontinuous reception configuration method implemented by the receiving device in each of the foregoing embodiments.

It can be seen that those skilled in the art should understand that the functional modules/units in all or some of the steps, systems and devicees in the methods disclosed above may be implemented as software (which may be implemented by computer program codes executable by a computing device), firmware, hardware and appropriate combinations thereof. In a hardware implementation, the division between functional modules/units referred to in the above description does not necessarily correspond to the division of physical components; for example, one physical component may have multiple functions, or one function or step may be cooperatively performed by several physical components. Some or all of the physical components may be implemented as software executed by a processor, such as a central processor, digital signal processor, or microprocessor, or as hardware, or as an integrated circuit, such as an application specific integrated circuit.

In addition, communication media typically embodies computer readable instructions, data structures, computer program modules, or other data in a modulated data signal such as a carrier wave or other transport mechanism, and may include any information delivery media, as known to those of ordinary skill in the art. Hence, the present disclosure is not limited to any particular hardware and software combination.

The above contents are further detailed description of the embodiments of the present disclosure with reference to specific embodiments, and it cannot be determined that the specific implementation of the present disclosure is only limited to these descriptions. For a person of ordinary skill in the art to which the present disclosure belongs, on the premise of not departing from the conception of the present disclosure, a number of simple deductions or replacements can also be made, and all of which should be considered to belong to the protection scope of the present disclosure.

## Claims

1. A discontinuous reception configuration method, comprising:
identifying a current communication scene of a terminal; and
issuing, according to a preset relationship between a communication scene and a discontinuous reception (DRX) cycle use strategy, a DRX cycle use strategy corresponding to the current communication scene.

2. The discontinuous reception configuration method according to claim 1, wherein the preset relationship between the communication scene and the DRX cycle use strategy comprises: when the terminal is in a communication scene in which a signal-to-noise ratio is less than a first preset signal-to-noise ratio threshold and a packet error rate is higher than a first preset packet error rate threshold, the current communication scene corresponds to a long DRX cycle use strategy.

3. The discontinuous reception configuration method according to claim 1, wherein the preset relationship between the communication scene and the DRX cycle use strategy comprises: when the terminal is in a communication scene of a measurement interval, the current communication scene corresponds to a long DRX cycle use strategy.

4. The discontinuous reception configuration method according to claim 1, wherein the preset relationship between the communication scene and the DRX cycle use strategy comprises: when the terminal is in a communication scene in which a delay of a ping packet is higher than a preset threshold value of the delay of the ping packet, the current communication scene corresponds to a short DRX cycle use strategy.

5. The discontinuous reception configuration method according to claim 1, wherein the preset relationship between the communication scene and the DRX cycle use strategy comprises: when the terminal is in a communication scene in which a round-trip delay of a downlink small traffic service is higher than a preset round-trip delay threshold value, the current communication scene corresponds to a short DRX cycle use strategy.

6. The discontinuous reception configuration method according to claim 1, wherein the preset relationship between the communication scene and the DRX cycle use strategy comprises: when the terminal is in a communication environment in which a signal-to-noise ratio is higher than a second preset signal-to-noise ratio threshold value and a packet error rate is higher than a second preset packet error rate threshold value, the current communication scene corresponds to a current DRX cycle use strategy of a base station.

7. A discontinuous reception configuration method, comprising:
receiving a DRX cycle use strategy, which is sent by a base station and issued according to a preset relationship between a communication scene and a DRX cycle use strategy, corresponding to a current communication scene; and
setting a corresponding DRX cycle according to the received DRX cycle use strategy.

8. The discontinuous reception configuration method according to claim 7, wherein the preset relationship between the communication scene and the DRX cycle use strategy comprises: when the terminal is in a communication scene in which a signal-to-noise ratio is less than a first preset signal-to-noise ratio threshold and a packet error rate is higher than a first preset packet error rate threshold, the current communication scene corresponds to a long DRX cycle use strategy.

9. The discontinuous reception configuration method according to claim 7, wherein the preset relationship between the communication scene and the DRX cycle use strategy comprises: when the terminal is in a communication scene of a measurement interval, the current communication scene corresponds to a long DRX cycle use strategy.

10. The discontinuous reception configuration method according to claim 7, wherein the preset relationship between the communication scene and a DRX cycle use strategy comprises: when the terminal is in a communication scene in which a delay of a ping packet is higher than a preset threshold value of a delay of the ping packet, the current communication scene corresponds to a short DRX cycle use strategy.

11. The discontinuous reception configuration method according to claim 7, wherein the preset relationship between the communication scene and a DRX cycle use strategy comprises: when the terminal is in a communication scene in which a round-trip delay of a downlink small traffic service is higher than a preset round-trip delay threshold value, the current communication scene corresponds to a short DRX cycle use strategy.

12. The discontinuous reception configuration method according to claim 7, wherein the preset relationship between the communication scene the a DRX cycle use strategy comprises: when the terminal is in a communication environment in which a signal-to-noise ratio is higher than a second preset signal-to-noise ratio threshold value and a packet error rate is higher than a second preset packet error rate threshold value, the current communication scene corresponds to a current DRX cycle use strategy of a base station.

13. A configuration device comprising:
an identification module, configured to identify a current communication scene of a terminal; and
a strategy issuing module, configured to issue a DRX cycle use strategy corresponding to the current communication scene according to a preset relationship between a communication scene and a DRX cycle use strategy.

14. A receiving device comprising:
a receiving module, configured to receive a DRX cycle use strategy, which is sent by a base station and issued according to a preset relationship between a communication scene and a DRX cycle use strategy, corresponding to a current communication scene; and
an execution component, configured to set a corresponding DRX cycle according to the received DRX cycle use strategy.

15. A base station, the base station comprising: a first processor, a first memory and a first communication bus, wherein
the first communication bus is configured to implement connection and communication between the first processor and the first memory; and
the first processor is configured to execute one or more computer programs stored in the first memory, so as to implement the operations of the discontinuous reception configuration method as claimed in any one of claims 1 to 6.

16. A terminal, the terminal comprising: a second processor, a second memory, and a second communication bus, wherein
the second communication bus is configured to implement connection and communication between the second processor and the second memory; and
the second processor is configured to execute one or more computer programs stored in the second memory, so as to implement the operations of the discontinuous reception configuration method according to any one of claims 7 to 12.

17. A storage medium, wherein the computer readable storage medium stores one or more computer programs, the one or more computer programs is executed by one or more processors to implement the operations of the discontinuous reception configuration method according to any one of claim 1 to claim 6 or the discontinuous reception configuration method according to any one of claim 7 to claim 12.
